# EUROPEAN PATENT APPLICATION

(11) **EP 4 645 968 A1**
(43) Date of publication of application: **05.11.2025**
(21) Application number: 22969570.5
(22) Date of filing: 28.12.2022
(51) Int. Cl.: H04W 56/00

(54) **INFORMATION REPORTING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/142760
(87) International publication number: WO 2024/138418

(57) **Abstract**

Provided in the embodiments of the present disclosure are an information reporting method and apparatus, and a communication device and a storage medium. The method comprises: sending first indication information to a base station of a non-terrestrial network, wherein the first indication information indicates that a terminal successfully executes or does not successfully execute global navigation satellite system (GNSS) measurement; and location information of the terminal that is obtained by means of executing the GNSS measurement is used for the determination of compensation information, and the compensation information is used for synchronization compensation for data transmission between the terminal and the base station. In the method, a terminal sends to a base station first indication information which indicates that the terminal successfully executes or does not successfully execute GNSS measurement, which, compared with a situation whereby it is not possible to determine whether the terminal successfully executes or does not successfully execute GNSS measurement in a timely manner, can better realize synchronization compensation for data transmission between the terminal and the base station on the basis of updated information related to the GNSS measurement.

## Description

### TECHNICAL FIELD

The present disclosure relates to but is not limited to the field of wireless communication technology, and in particular to an information reporting method and apparatus, a communication device and a storage medium.

### BACKGROUND

In wireless communication technology, satellite communication is considered to be an important aspect of the development of wireless communication technology. The satellite communication refers to the communication performed by radio communication devices on the ground using satellites as relays. The satellite communication system consists of a satellite part and a ground part. The satellite communication has the following characteristics: a large communication range; communication can be carried out between any two points as long as they are within the range covered by the radio waves emitted by the satellite; and it is not easily affected by land disasters. The satellite communication can be used as a supplement to the terrestrial cellular communication system. In the satellite communication scenarios, due to the long signal transmission distance between a transmitter and a receiver, data transmission takes a long time. In the related art, in the satellite communication scenarios, the terminal needs to be aware of location information of the terminal. When the terminal performs measurement of the terminal position, how to ensure that the network equipment and the terminal have a consistent understanding of the availability of the terminal's position information is a problem that needs to be considered.

### SUMMARY

The embodiments of the present disclosure disclose an information reporting method and apparatus, a communication device and a storage medium.

According to a first aspect of embodiments of the present disclosure, an information reporting method is provided, the method is performed by a terminal, and the method includes:
sending first indication information to a base station of a non-terrestrial network (NTN);
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

In an embodiment, the method further includes one of the following:
obtaining a GNSS measurement result by performing the GNSS measurement based on trigger information sent by the base station;
obtaining a GNSS measurement result by performing the GNSS measurement based on measurement configuration information sent by the base station; and
obtaining a GNSS measurement result by performing the GNSS measurement based on predetermined measurement configuration information.

In an embodiment, sending the first indication information to the base station of the NTN includes:
sending the first indication information to the base station through a predetermined resource; or
sending the first indication information to the base station through a resource indicated by second indication information that is received, where the second indication information is information sent by the base station to the terminal.

In an embodiment, the second indication information is trigger information for triggering the terminal to perform the GNSS measurement.

In an embodiment, the predetermined resource is a resource determined based on a resource used for the GNSS measurement.

In an embodiment, in response to that the terminal successfully performs the GNSS, the first indication information indicates a validity duration of the GNSS information.

In an embodiment, in response to that the terminal successfully performs the GNSS, the first indication information indicates information of a GNSS position fix time duration.

In an embodiment, in response to that the terminal successfully performs the GNSS, the first indication information indicates at least one of the following:
information on successful GNSS measurement performed by the terminal; and
information indicating that GNSS assistance information is changed or is not changed; where the GNSS assistance information includes a validity duration of the GNSS information and/or information of a GNSS position fix time duration.

In an embodiment, in response to the GNSS assistance information being changed, the method further includes:
receiving request information sent by the base station for obtaining the GNSS assistance information; and
sending the GNSS assistance information to the base station.

In an embodiment, the method further includes:
receiving configuration information sent by the base station;
where the configuration information is configured to indicate a mapping relationship between a value of an information field of the first indication information, a GNSS measurement result, and a change result of the GNSS assistance information; and
where sending the first indication information to the base station of the non-terrestrial network (NTN) includes:
   sending the first indication information to the base station of the non-terrestrial network (NTN) based on the configuration information.

In an embodiment, in response to that the terminal fails to successfully perform the GNSS measurement, the first indication information further indicates request information for requesting to obtain GNSS measurement configuration information, where the GNSS measurement configuration information is used for performing the GNSS measurement.

According to a second aspect of embodiments of the present disclosure, an information reporting method is provided, the method is performed by a base station, and the method includes:
receiving first indication information sent by a terminal that accesses a NTN;
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

In an embodiment, receiving the first indication information sent by the terminal that accesses the NTN includes:
receiving, through a predetermined resource, the first indication information sent by the terminal that accesses the NTN; or
receiving, through a resource indicated by second indication information, the first indication information sent by the terminal that accesses the NTN, where the second indication information is information sent by the base station to the terminal.

In an embodiment, the second indication information is trigger information for triggering the terminal to perform the GNSS measurement.

In an embodiment, the predetermined resource is a resource determined based on a resource used for the GNSS measurement.

In an embodiment, in response to that the terminal successfully performs the GNSS, the first indication information indicates a validity duration of the GNSS information.

In an embodiment, in response to that the terminal successfully performs the GNSS, the first indication information indicates information of a GNSS position fix time duration.

In an embodiment, in response to that the terminal successfully performs the GNSS, the first indication information indicates at least one of the following:
information on successful GNSS measurement performed by the terminal; and
information indicating that GNSS assistance information is changed or is not changed; where the GNSS assistance information includes a validity duration of the GNSS information and/or information of a GNSS position fix time duration.

In an embodiment, in response to the GNSS assistance information being changed, the method further includes:
sending request information for obtaining the GNSS assistance information to the terminal; and
receiving the GNSS assistance information sent by the terminal.

In an embodiment, the method further includes:
sending configuration information to the terminal; where the configuration information is configured to indicate a mapping relationship between a value of an information field of the first indication information, a GNSS measurement result, and a change result of the GNSS assistance information; and
where receiving the first indication information sent by the terminal that accesses the NTN includes:
   receiving the first indication information sent by the terminal based on the configuration information.

In an embodiment, the first indication information further indicates request information for requesting to obtain GNSS measurement configuration information, where the GNSS measurement configuration information is used for performing the GNSS measurement.

In an embodiment, the method further includes:
determining that the GNSS measurement is successful or is not successful based on the first indication information.

According to a third aspect of embodiments of the present disclosure, there is provided an information reporting apparatus, and the apparatus includes:
a sending module, configured to send first indication information to a base station of a non-terrestrial network (NTN);
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation for data transmission between the terminal and the base station.

According to a fourth aspect of embodiments of the present disclosure, there is provided an information reporting apparatus, and the apparatus includes:
a receiving module, configured to receive first indication information sent by a terminal that accesses a NTN;
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation for data transmission between the terminal and the base station.

According to a fifth aspect of embodiments of the present disclosure, a communication device is provided, and the communication device includes:
a processor; and
a memory configured to store instructions executable by the processor;
where the processor is configured to implement the method according to any embodiment of the present disclosure when running the executable instructions.

According to a sixth aspect of embodiments of the present disclosure, a computer storage medium is provided, the computer storage medium stores a computer executable program, and the executable program, when being executed by a processor, implements the method according to any embodiment of the present disclosure.

In the embodiments of the present disclosure, first indication information is sent to a base station of a non-terrestrial network (NTN), the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation for data transmission between the terminal and the base station. Here, since the terminal sends the first indication information to the base station indicating that the terminal successfully performs or fails to successfully perform the GNSS measurement, the base station can promptly determine that the terminal successfully performs or fails to successfully perform the GNSS measurement, thereby promptly updating information related to the GNSS measurement. Compared with the situation where it is not possible to promptly determine that the terminal successfully performs or fails to successfully perform the GNSS measurement, it can realize synchronization compensation for data transmission between the terminal and the base station based on the updated information related to the GNSS measurement in a better way.

### BRIEF DESCRIPTION OF THE DRAWINGS

FIG. 1 is a schematic structural diagram of a wireless communication system according to an illustrative embodiment.
FIG. 2 is a schematic diagram showing a scenario in which uplink and downlink timings at a base station side are aligned according to an illustrative embodiment.
FIG. 3 is a schematic diagram showing a scenario in which uplink and downlink timings at a base station side are not aligned according to an illustrative embodiment.
FIG. 4 is a schematic flow chart of an information reporting method according to an illustrative embodiment.
FIG. 5 is a schematic diagram showing a resource determination manner according to an illustrative embodiment.
FIG. 6 is a schematic diagram showing a resource determination manner according to an illustrative embodiment.
FIG. 7 is a schematic flow chart of an information reporting method according to an illustrative embodiment.
FIG. 8 is a schematic flow chart of an information reporting method according to an illustrative embodiment.
FIG. 9 is a schematic flow chart of an information reporting method according to an illustrative embodiment.
FIG. 10 is a schematic flow chart of an information reporting method according to an illustrative embodiment.
FIG. 11 is a schematic flow chart of an information reporting method according to an illustrative embodiment.
FIG. 12 is a schematic flow chart of an information reporting method according to an illustrative embodiment.
FIG. 13 is a schematic flow chart of an information reporting method according to an illustrative embodiment.
FIG. 14 is a schematic diagram of an information reporting apparatus according to an illustrative embodiment.
FIG. 15 is a schematic diagram of an information reporting apparatus according to an illustrative embodiment.
FIG. 16 is a schematic structural diagram showing of a terminal according to an illustrative embodiment.
FIG. 17 is a block diagram of a base station according to an illustrative embodiment.

### DETAILED DESCRIPTION

Illustrative embodiments will be described in detail herein, examples of which are shown in the accompanying drawings. When the following description refers to the drawings, the same numbers in different drawings represent the same or similar elements unless otherwise indicated. The implementations described in the following illustrative embodiments do not represent all implementations consistent with the embodiments of the present disclosure. Instead, they are merely examples of devices and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

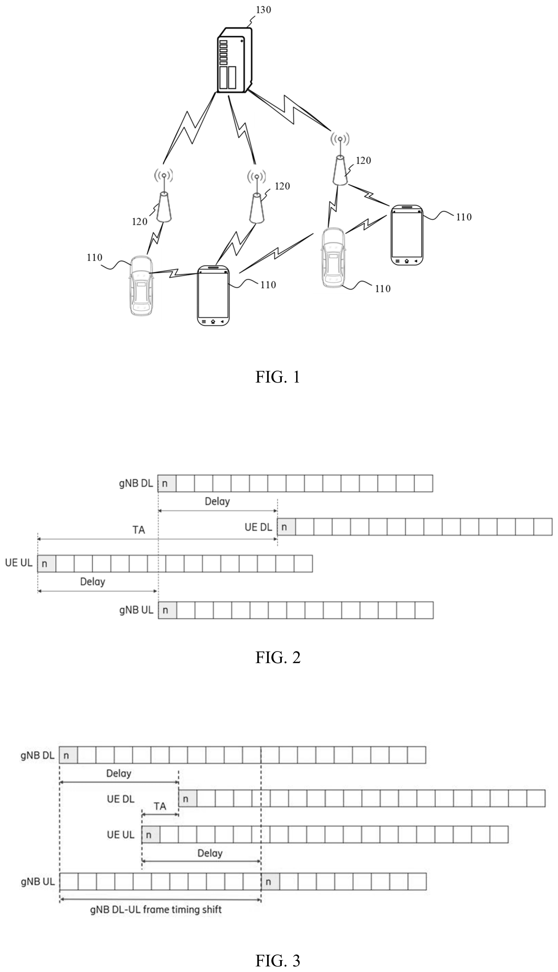

Please refer to FIG. 1, it is a schematic structural diagram showing a wireless communication system provided by an embodiment of the present disclosure. As shown in FIG. 1, the wireless communication system is a communication system based on mobile communication technology, and the wireless communication system may include one or more user equipments 110 and one or more base stations 120.

The user equipment 110 can be a device that provides voice and/or data connectivity to the user. The user equipment 110 can communicate with one or more core networks via a radio access network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a wireless user device connected to an external driving computer. Alternatively, the user equipment 110 may also be a roadside device, for example, a street lamp, a signal lamp or other roadside device with a wireless communication function.

The base station 120 may be a network-side device in a wireless communication system. The wireless communication system may be a fourth generation mobile communication technology (4G) system, also known as a long term evolution (LTE) system; or the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 can be an evolved base station (eNB) adopted in a 4G system. Alternatively, the base station 120 can also be a base station (gNB) adopting a central distributed architecture in a 5G system. When the base station 120 adopts the central distributed architecture, it usually includes a central unit (CU) and at least two distributed units (DUs). The central unit is provided with protocol stacks of a packet data convergence protocol (PDCP) layer, a radio link layer control protocol (RLC) layer, and a media access control (MAC) layer; the distributed unit is provided with a physical (PHY) layer protocol stack. The specific implementation of the base station 120 is not limited in the embodiments of the present disclosure.

A wireless connection may be established between the base station 120 and the user equipment 110 via a wireless air interface. In different implementations, the wireless air interface is a wireless air interface based on the fourth generation mobile communication network technology (4G) standard; or the wireless air interface is a wireless air interface based on the fifth generation mobile communication network technology (5G) standard, for example, the wireless air interface is a new radio interface; or the wireless air interface may also be a wireless air interface based on the next generation mobile communication network technology standard of 5G.

In some embodiments, an End to End (E2E) connection may also be established between the user devices 110, such as vehicle to vehicle (V2V) communication, vehicle to Infrastructure (V2I) communication, and vehicle to pedestrian (V2P) communication in vehicle to everything (V2X) communication.

Here, the user equipment can be considered as the terminal device in the following embodiments.

In some embodiments, the wireless communication system may further include a network management device 130.

Several base stations 120 are respectively connected to the network management device 130. The network management device 130 may be a core network device in a wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS). The implementation forms of the network management device 130 are not limited in the embodiments of the present disclosure.

In order to facilitate understanding by those skilled in the art, the embodiments of the present disclosure enumerates a plurality of implementations to clearly illustrate the technical solutions of the embodiments of the present disclosure. Of course, those skilled in the art can understand that the plurality of embodiments provided by the embodiments of the present disclosure can be performed separately, or can be performed together in combination with the methods of other embodiments in the embodiments of the present disclosure, or can be performed with some methods in other related art separately or in combination, which is not limited in the embodiments of the present disclosure.

In order for better understanding of the embodiments of the present disclosure, paging relevant scenarios are described below.

The continuous emergence of new Internet applications such as augmented reality (AR), virtual reality (VR) and vehicle-to-vehicle communication has put forward higher requirements for wireless communication technology, driving the continuous evolution of wireless communication technology to meet the needs of applications. Cellular mobile communication technology is in the evolution stage of a new generation of technology. An important feature of the new generation of technology is to support flexible configuration of multiple service types. Different service types have different requirements for wireless communication technology, for example, the main requirements of the enhanced mobile broadband (eMBB) service type focus on large bandwidth, high rate, etc.; the main requirements of the ultra reliable low latency communication (uRLLC) service type focus on high reliability and low latency; the main requirements of the massive machine communication (mMTC) service type focus on a large number of connections. Therefore, the new generation of wireless communication systems require flexible and configurable designs to support the transmission of multiple service types.

As a supplement to the terrestrial cellular communication system, satellite communication has at least one of the following benefits:
1. Extended coverage. For areas that cannot be covered by cellular communication systems or that are costly to cover, such as oceans, deserts, and remote mountainous areas, satellite communications can be used to solve communication problems.
2. Emergency communications: In extreme situations of disasters (such as earthquakes) that make cellular communications infrastructure unavailable, satellite communications can be used to quickly establish communications connections.
3. Provide industry applications. For example, for delay-sensitive services in long-distance transmission, satellite communications can be used to reduce the delay of service transmission.

It can be foreseen that in future wireless communication systems, deep integration of satellite communication systems and terrestrial cellular communication systems will be gradually achieved and the intelligent connection of all things can be truly realized.

In an embodiment, in a satellite communication scenario, due to the long signal transmission distance between the transmitter and the receiver, data transmission takes a long time. For transmission with uplink and downlink relationship, it is determined to introduce a parameter K_{offset} to compensate for the transmission delay.

In an embodiment, referring to FIG. 2, it shows a scenario where uplink and downlink timings are aligned on the base station side. Referring to FIG. 3, it shows a scenario where the uplink and downlink timings are not aligned on the base station side.

It should be noted that the K_{offset} can be applied to a variety of scenarios, for example, transmission of physical uplink shared channel (PUSCH) scheduled by downlink control information (DCI); transmission of hybrid automatic repeat request (HARQ) feedback information, transmission of media access control (MAC) control element (MAC CE), etc.

In an embodiment, in a satellite communication scenario, the terminal needs to know the position information of the terminal in order to perform compensation for uplink synchronization. For Internet of Things (IoT) terminals, simultaneous operation of the cellular module and Global Navigation Satellite System (GNSS) module are not supported, and only sporadic transmission is supported.

In an embodiment, when a service with a relatively long transmission time is supported, in a case where the GNSS information is expired, the terminal needs to obtain the GNSS information. However, the method of entering the Radio Resource Control (RRC) idle state in the related art will cause unnecessary delays and power consumption.

In an embodiment, the GNSS information can be re-acquired by triggering the terminal to perform GNSS measurement. However, after the terminal performs the GNSS measurement, the base station does not know whether the terminal has successfully performed the GNSS measurement. In this case, the base station and the terminal may have different understandings of the GNSS available time of the terminal. Therefore, it is necessary to clarify how to make the base station know the GNSS status of the terminal.

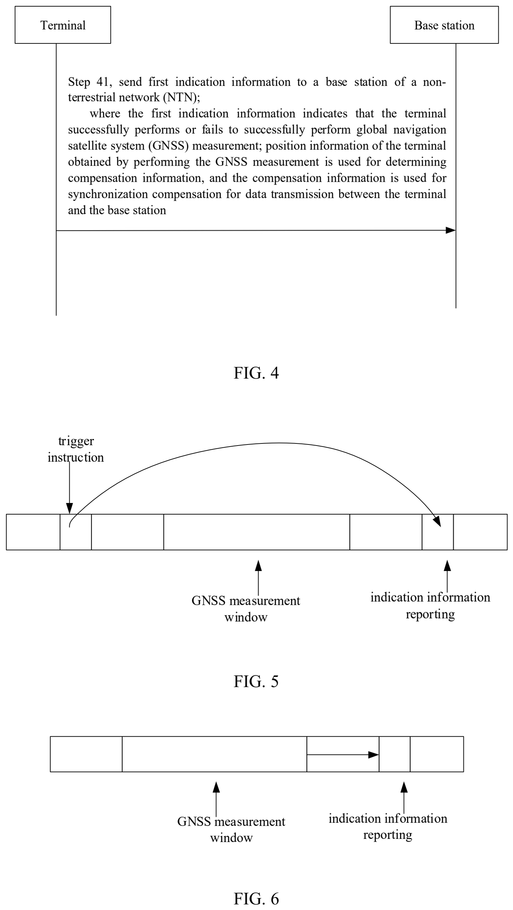

As shown in FIG. 4, this embodiment provides an information reporting method, the method is executed by a terminal, and the method includes:
step 41, sending first indication information to a base station of a non-terrestrial network (NTN);
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of new radio (NR) terminal (for example, an R17 NR terminal).

The base station involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the GNSS measurement is performed to obtain a GNSS measurement result, the GNSS measurement result may be a result that the terminal successfully performs the GNSS measurement. The first indication information is sent to the base station of the non-terrestrial network (NTN); the first indication information indicates that the terminal successfully performs the global navigation satellite system (GNSS) measurement; and the position information of the terminal obtained by performing the GNSS measurement is used for determining compensation information, and the compensation information is used for synchronization compensation for data transmission between the terminal and the base station.

In an embodiment, the GNSS measurement is performed to obtain a GNSS measurement result, the GNSS measurement result may be a result that the terminal fails to successfully perform the GNSS measurement. The first indication information is sent to the base station of the non-terrestrial network (NTN); the first indication information indicates that the terminal fails to successfully perform the global navigation satellite system (GNSS) measurement; and the position information of the terminal obtained by performing the GNSS measurement is used for determining compensation information, and the compensation information is used for synchronization compensation for data transmission between the terminal and the base station.

In an embodiment, the GNSS measurement is performed based on trigger information sent by the base station to obtain a GNSS measurement result, the GNSS measurement result may be a result that the terminal successfully performs or fails to successfully perform the global navigation satellite system (GNSS) measurement. The first indication information is sent to the base station of the non-terrestrial network (NTN); the first indication message indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. In some embodiments, the trigger information may be carried by RRC signaling, MAC CE or physical layer signaling DCI, and the trigger information is used to trigger the terminal to perform the GNSS measurement.

In an embodiment, the GNSS measurement is performed based on measurement configuration information sent by the base station to obtain a GNSS measurement result, the GNSS measurement result may be a result that the terminal successfully performs or fails to successfully perform the GNSS measurement. The first indication message is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. In some embodiments, the measurement configuration information may be carried by RRC signaling, MAC CE or physical layer signaling DCI, and the measurement configuration information is used to configure time-domain or frequency-domain resource locations for the terminal to perform the GNSS measurement.

In an embodiment, the GNSS measurement is performed based on predetermined measurement configuration information to obtain a GNSS measurement result, the GNSS measurement result may be a result that the terminal successfully performs or fails to successfully perform the GNSS measurement. The first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Here, the predetermined measurement configuration information may be stored in the terminal in advance.

In an embodiment, the first indication information is sent to the base station of the non-terrestrial network (NTN) through a predetermined resource; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. The predetermined resource may be a time domain and/or frequency domain resource.

Here, the predetermined resource is a resource determined based on the resource used for the GNSS measurement.

For example, referring to FIG. 5, the predetermined resource is a resource determined based on a GNSS measurement window configured for the terminal. For example, the predetermined resource is a resource separated from an end position of the GNSS measurement window by a predetermined time domain and/or frequency domain offset.

In an embodiment, the first indication information is sent to the base station of the non-terrestrial network (NTN) through a resource indicated by second indication information received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and the second indication information is information sent by the base station to the terminal.

In an embodiment, the first indication information is sent to the base station of the non-terrestrial network (NTN) through a resource indicated by second indication information received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and the second indication information may be trigger information for triggering the terminal to perform the GNSS measurement.

For example, referring to FIG. 6, the terminal carries information indicating the resource location in a trigger instruction (corresponding to the trigger information) of the GNSS measurement. After obtaining the trigger instruction, the terminal can report the first indication information at the resource location indicated by the trigger instruction.

In an embodiment, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and in response to the terminal successfully performing the GNSS, the first indication information indicates a validity duration of the GNSS information (GNSS validity duration).

In an embodiment, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and in response to the terminal successfully performing GNSS, the first indication information indicates information on a GNSS position fix time duration.

In an embodiment, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; in response to the terminal successfully performing GNSS, the first indication information indicates information that the terminal has successfully performed the GNSS measurement and/or information indicating that GNSS assistance information is changed or is not changed; and the GNSS assistance information includes the validity duration of the GNSS information and/or information on the GNSS position fix time duration.

In an embodiment, configuration information sent by the base station is received; the configuration information is configured to indicate a mapping relationship between a value of an information field of the first indication information, the GNSS measurement result and the change result of the GNSS assistance information. Based on the configuration information, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

It should be noted that the configuration information may be predefined, or may be received by the terminal from the base station through RRC signaling, MAC CE or physical layer signaling.

As shown in Table 1, the mapping relationship between the value of the information field of the first indication information, the GNSS measurement result and the change result of the GNSS assistance information is shown.

**Table 1:**

| Information field | Changes in GNSS measurement results and GNSS assistance information |
|---|---|
| 00 | Terminal's GNSS measurement failed, and GNSS assistance information is not changed |
| 01 | Terminal's GNSS measurement failed, and GNSS assistance information is changed |
| 10 | Terminal's GNSS measurement is successful, and GNSS assistance information is not changed |
| 11 | Terminal's GNSS measurement is successful, and GNSS assistance information is changed |

In an embodiment, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Request information for obtaining the GNSS assistance information sent by the base station is received, and the GNSS assistance information includes a validity duration of the GNSS information and/or a GNSS position fix time duration. The GNSS assistance information is sent to the base station.

In an embodiment, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; the first indication information also indicates request information for requesting to obtain GNSS measurement configuration information, and the GNSS measurement configuration information is used for performing the GNSS measurement.

It should be noted that ensuring that the terminal and the base station have the same understanding of the available GNSS information can avoid the terminal performing useless GNSS measurements or the base station scheduling the terminal that is out of synchronization to perform uplink transmission, which can effectively reduce the power consumption of the terminal while ensuring the reliability of the system.

In the embodiments of the present disclosure, the first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Here, since the terminal sends the first indication information to the base station indicating that the terminal successfully performs or fails to successfully perform the GNSS measurement, the base station can promptly determine that the terminal successfully performs or fails to successfully perform the GNSS measurement, thereby promptly updating information related to the GNSS measurement. Compared with the situation where it is not possible to promptly determine that the terminal successfully performs or fails to successfully perform the GNSS measurement, it can realize synchronization compensation of data transmission between the terminal and the base station based on the updated information related to the GNSS measurement in a better way.

It should be noted that those skilled in the art can understand that the method provided in the embodiments of the present disclosure can be performed alone or together with some methods in the embodiments of the present disclosure or some methods in related art.

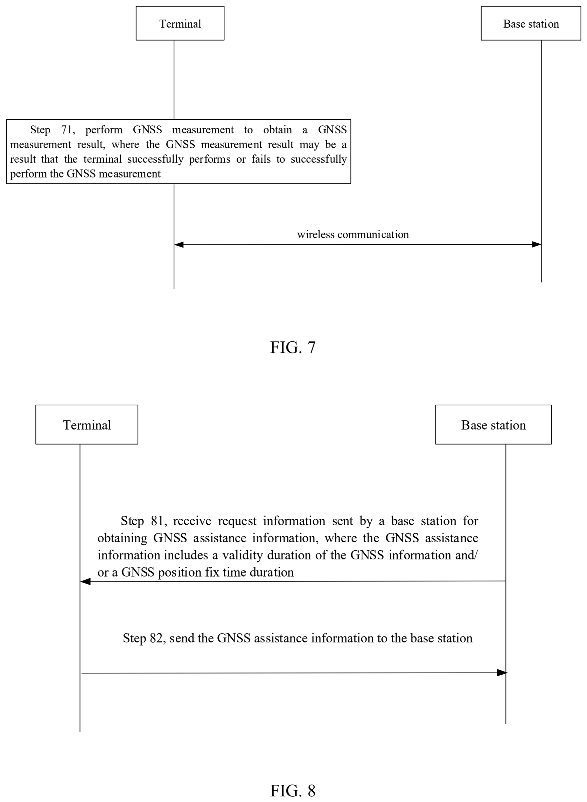

As shown in FIG. 7, this embodiment provides an information reporting method, the method is performed by a terminal, and the method includes:
step 71, performing GNSS measurement to obtain a GNSS measurement result, where the GNSS measurement result may be a result that the terminal successfully performs or fails to successfully perform the GNSS measurement.

In an embodiment, the GNSS measurement is performed based on trigger information sent by the base station to obtain the GNSS measurement result, the GNSS measurement result may be a result that the terminal successfully performs or fails to successfully perform the GNSS measurement. First indication information is sent to a base station of a non-terrestrial network (NTN); the first indication information indicates that the terminal successfully performs or fails to successfully perform the global navigation satellite system (GNSS) measurement; position information of the terminal obtained by performing the GNSS measurement is used for determining compensation information, and the compensation information is used for synchronization compensation of data transmission between the terminal and the base station.

In an embodiment, the GNSS measurement is performed based on measurement configuration information sent by the base station to obtain the GNSS measurement result, the GNSS measurement result may be a result that the terminal successfully performs or fails to successfully perform the GNSS measurement. First indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

In an embodiment, the GNSS measurement is performed based on predetermined measurement configuration information to obtain the GNSS measurement result, the GNSS measurement result may be a result that the terminal successfully performs or fails to successfully perform the GNSS measurement. The first indication information is sent to the base station of the non-terrestrial network (NTN); the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Here, the predetermined measurement configuration information may be stored in the terminal in advance.

It should be noted that those skilled in the art can understand that the method provided in the embodiments of the present disclosure can be performed alone or together with some methods in the embodiments of the present disclosure or some methods in related art.

As shown in FIG. 8, this embodiment provides an information reporting method, the method is performed by a terminal, and the method includes:
step 81, receiving request information that is used for obtaining GNSS assistance information and is sent by a base station, where the GNSS assistance information includes information on a validity duration of the GNSS information and/or a GNSS position fix time duration; and
step 82, sending the GNSS assistance information to the base station.

In an embodiment, in response to that the GNSS assistance information is changed, request information that is used for obtaining GNSS assistance information and is sent by the base station is received, the GNSS assistance information includes information on the validity duration of the GNSS information and/or the GNSS position fix time duration, and the GNSS assistance information is sent to the base station.

In an embodiment, first indication information is sent to the base station of the non-terrestrial network (NTN); the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station. In response to that the terminal successfully performs the GNSS, the first indication information indicates information that the terminal has successfully performed the GNSS measurement and/or information indicating that the GNSS assistance information is changed or is not changed; the GNSS assistance information includes information on the validity duration of the GNSS information and/or the GNSS position fix time duration. In response to that the GNSS assistance information is changed, request information sent by the base station for obtaining GNSS assistance information is received. The GNSS assistance information is sent to the base station.

It should be noted that those skilled in the art can understand that the method provided in the embodiments of the present disclosure can be performed alone or together with some methods in the embodiments of the present disclosure or some methods in related art.

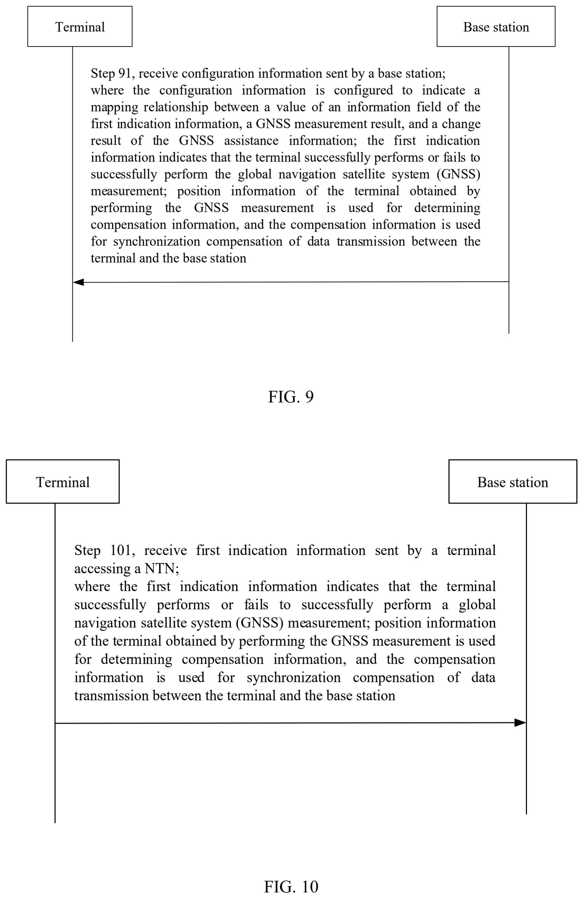

As shown in FIG. 9, this embodiment provides an information reporting method, the method is performed by a terminal, and the method includes:
step 91, receiving configuration information sent by a base station;
where the configuration information is configured to indicate a mapping relationship between a value of an information field of the first indication information, a GNSS measurement result, and a change result of the GNSS assistance information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

In an embodiment, the configuration information sent by the base station is received; the configuration information is configured to indicate a mapping relationship between a value of an information field of the first indication information, a GNSS measurement result, and a change result of GNSS assistance information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

It should be noted that those skilled in the art can understand that the method provided in the embodiments of the present disclosure can be performed alone or together with some methods in the embodiments of the present disclosure or some methods in related art.

As shown in FIG. 10, this embodiment provides an information reporting method, the method is performed by a base station, and the method includes:
step 101, receiving first indication information sent by a terminal accessing a NTN;
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of new radio (NR) terminal (for example, an R17 NR terminal).

The base stations involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the first indication information sent by the terminal accessing the NTN is received through a predetermined resource; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. The predetermined resource may be a time domain and/or frequency domain resource.

Here, the predetermined resource is a resource determined based on the resource used for the GNSS measurement.

For example, referring to FIG. 5, the predetermined resource is a resource determined based on a GNSS measurement window configured for the terminal. For example, the predetermined resource is a resource separated from an end position of the GNSS measurement window by a predetermined time domain and/or frequency domain offset.

In an embodiment, the first indication information sent by the terminal accessing the NTN is received through a resource indicated by second indication information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and the second indication information is information sent by the base station to the terminal.

In an embodiment, the first indication information sent by the terminal accessing the NTN is received through a resource indicated by second indication information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and the second indication information is trigger information for triggering the terminal to perform the GNSS measurement.

For example, referring to FIG. 6, the terminal carries information indicating the resource location on a trigger instruction (corresponding to the trigger information) of the GNSS measurement. After obtaining the trigger instruction, the terminal can report the first indication information at the resource location indicated by the trigger instruction.

In an embodiment, the first indication information sent by the terminal accessing the NTN is received; the first indication information indicates that the terminal successfully performs or fails to successfully perform the global navigation satellite system (GNSS) measurement; position information of the terminal obtained by performing the GNSS measurement is used for determining compensation information, and the compensation information is used for synchronization compensation of data transmission between the terminal and the base station; and in response to that the terminal successfully performs the GNSS, the first indication information indicates a validity duration of the GNSS information (GNSS validity duration).

In an embodiment, the first indication information sent by the terminal accessing the NTN is received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; and in response to that the terminal successfully performs the GNSS, the first indication information indicates information on a GNSS position fix time duration.

In an embodiment, the first indication information sent by the terminal accessing the NTN is received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; in response to that the terminal successfully performs the GNSS, the first indication information indicates information that the terminal successfully performs the GNSS measurement and/or information indicating that the GNSS assistance information is changed or is not changed; and the GNSS assistance information includes the validity duration of the GNSS information and/or information on the GNSS position fix time duration.

In an embodiment, configuration information is sent to the terminal; the configuration information is configured to indicate a mapping relationship between a value of an information field of the first indication information, a GNSS measurement result, and a change result of GNSS assistance information. The first indication information sent by the terminal accessing the NTN is received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

It should be noted that the configuration information can be sent to the terminal via RRC signaling, MAC CE or physical layer signaling.

As shown in Table 1, the mapping relationship between the value of the information field of the first indication information, the GNSS measurement result and the change result of the GNSS assistance information is shown.

In an embodiment, the first indication information sent by the terminal accessing the NTN is received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Request information for obtaining GNSS assistance information is sent to the terminal, and the GNSS assistance information includes information of a validity duration of the GNSS information and/or a GNSS position fix time duration. The GNSS assistance information is sent to the base station.

In an embodiment, the first indication information sent by the terminal accessing the NTN is received; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station; the first indication information further indicates request information for requesting to obtain GNSS measurement configuration information, and the GNSS measurement configuration information is used to perform the GNSS measurement.

It should be noted that ensuring that the terminal and the base station have the same understanding of the available GNSS information can avoid the terminal performing useless GNSS measurements or the base station scheduling the terminal that is out of synchronization to perform uplink transmission, which can effectively reduce the power consumption of the terminal while ensuring the reliability of the system.

In the embodiments of the present disclosure, the first indication information sent by the terminal accessing the NTN is received; the indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. Here, since the terminal sends the first indication information indicating that the terminal successfully performs or fails to successfully perform the GNSS measurement to the base station, the base station can promptly determine that the terminal successfully performs or fails to successfully perform the GNSS measurement, thereby promptly updating information related to the GNSS measurement. Compared with the situation where it is not possible to promptly determine that the terminal successfully performs or fails to successfully perform the GNSS measurement, it can realize the synchronization compensation of data transmission between the terminal and the base station based on the updated information related to the GNSS measurement in a better way.

It should be noted that those skilled in the art can understand that the method provided in the embodiments of the present disclosure can be performed alone or together with some methods in the embodiments of the present disclosure or some methods in related art.

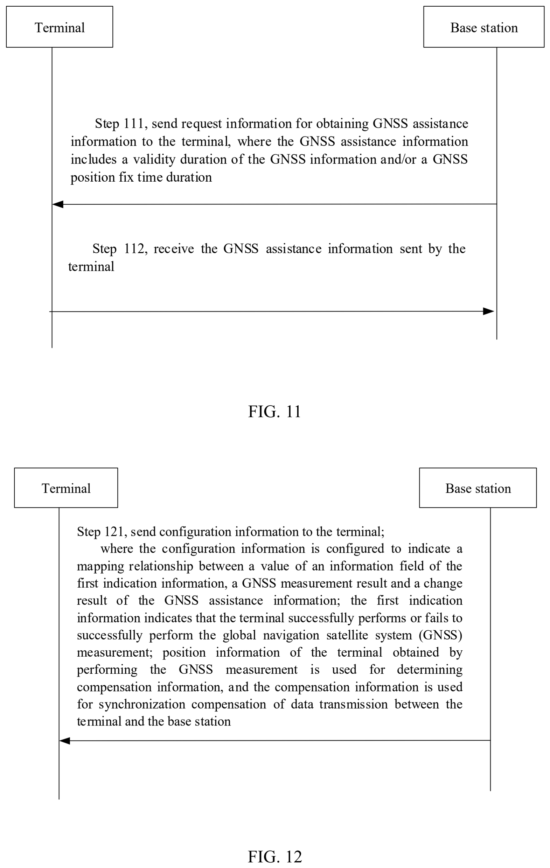

As shown in FIG. 11, this embodiment provides an information reporting method, the method is performed by a base station, and the method includes:
step 111, sending request information for obtaining GNSS assistance information to the terminal, where the GNSS assistance information includes information on a validity duration of the GNSS information and/or a GNSS position fix time duration; and
step 112, receiving the GNSS assistance information sent by the terminal.

In an embodiment, in response to that the GNSS assistance information is changed, the request information for obtaining GNSS assistance information is sent to the terminal, the GNSS assistance information includes information on the validity duration of the GNSS information and/or the GNSS position fix time duration. The GNSS assistance information sent by the terminal is received.

In an embodiment, first indication information sent by the terminal is received; the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station. In response to that the terminal successfully performs the GNSS, the first indication information indicates information that the terminal successfully performs the GNSS measurement and/or information indicating that the GNSS assistance information is changed or is not changed; the GNSS assistance information includes the validity duration of the GNSS information and/or the GNSS position fix time duration. In response to that the GNSS assistance information is changed, the request information for obtaining the GNSS assistance information is sent to the terminal, and the GNSS assistance information includes the validity duration of the GNSS information and/or the GNSS position fix time duration. The GNSS assistance information sent by the terminal is received.

It should be noted that those skilled in the art can understand that the method provided in the embodiments of the present disclosure can be performed alone or together with some methods in the embodiments of the present disclosure or some methods in related art.

As shown in FIG. 12, this embodiment provides an information reporting method, the method is performed by a base station, and the method includes:
step 121, sending configuration information to the terminal;
where the configuration information is configured to indicate a mapping relationship between a value of an information field of the first indication information, a GNSS measurement result and a change result of the GNSS assistance information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

In an embodiment, the configuration information is sent to the terminal; the configuration information is configured to indicate a mapping relationship between a value of an information field of the first indication information, a GNSS measurement result, and a change result of GNSS assistance information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station.

In an embodiment, the configuration information is sent to the terminal; the configuration information is configured to indicate a mapping relationship between a value of an information field of the first indication information, a GNSS measurement result, and a change result of GNSS assistance information; the first indication information indicates that the terminal successfully performs or fails to successfully perform the global navigation satellite system (GNSS) measurement; the position information of the terminal obtained by performing the GNSS measurement is used for determining compensation information, and the compensation information is used for synchronization compensation of data transmission between the terminal and the base station. The first indication information sent by the terminal is received.

It should be noted that those skilled in the art can understand that the method provided in the embodiments of the present disclosure can be performed alone or together with some methods in the embodiments of the present disclosure or some methods in related art.

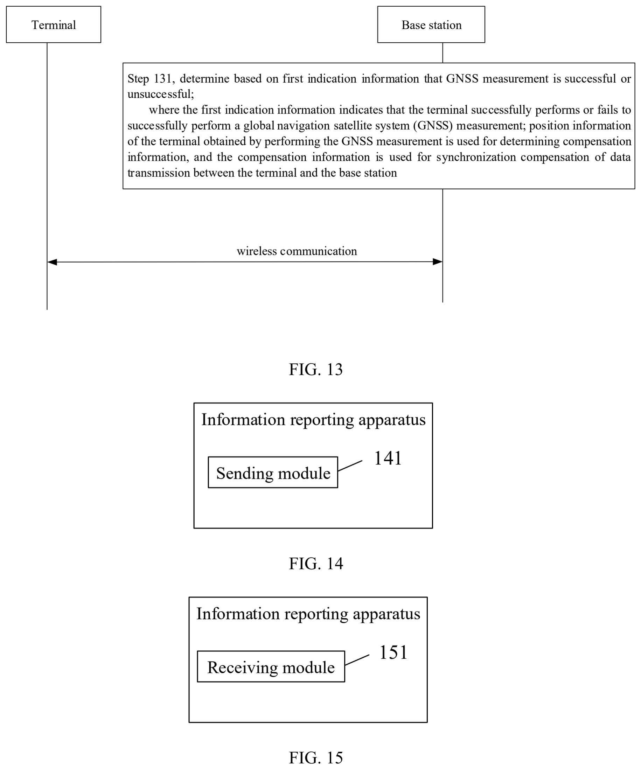

As shown in FIG. 13, this embodiment provides an information reporting method, the method is performed by a base station, and the method includes:
step 131, determining, based on first indication information, that the GNSS measurement is successful or is not successful;
where the first indication information indicates that the terminal successfully performs or fails to successfully perform the global navigation satellite system (GNSS) measurement; position information of the terminal obtained by performing the GNSS measurement is used for determining compensation information, and the compensation information is used for synchronization compensation of data transmission between the terminal and the base station.

In an embodiment, the first indication information sent by the terminal is received; the first indication information indicates that the terminal successfully performs or fails to successfully perform the global navigation satellite system (GNSS) measurement; position information of the terminal obtained by performing the GNSS measurement is used for determining compensation information, and the compensation information is used for synchronization compensation of data transmission between the terminal and the base station. That the GNSS measurement is successful or unsuccessful is determined based on the first indication information.

It should be noted that those skilled in the art can understand that the method provided in the embodiments of the present disclosure can be performed alone or together with some methods in the embodiments of the present disclosure or some methods in related art.

As shown in FIG. 14, an information reporting apparatus is provided in an embodiment of the present disclosure, and the apparatus includes:
a sending module 141, configured to send first indication information to a base station of a non-terrestrial network (NTN);
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

It should be noted that those skilled in the art can understand that the method provided in the embodiments of the present disclosure can be performed alone or together with some methods in the embodiments of the present disclosure or some methods in related art.

As shown in FIG. 15, an information reporting apparatus is provided in an embodiment of the present disclosure, and the apparatus includes:
a receiving module 151, configured to receive first indication information sent by a terminal accessing a NTN;
where the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

It should be noted that those skilled in the art can understand that the method provided in the embodiments of the present disclosure can be performed alone or together with some methods in the embodiments of the present disclosure or some methods in related art.

An embodiment of the present disclosure provides a communication device, and the communication device includes:
a processor; and
a memory configured to store instructions executable by the processor;
where the processor is configured to implement the method applied to any embodiment of the present disclosure when running the executable instructions.

The processor may include various types of storage media, which are non-transitory computer storage media that can continue to memorize information stored thereon after the communication device loses power.

The processor can be connected to the memory via a bus or the like to read the executable program stored in the memory.

An embodiment of the present disclosure further provides a computer storage medium, the computer storage medium stores a computer executable program, and when the executable program is performed by a processor, the method in any embodiment of the present disclosure is implemented.

Regarding the device in the above embodiments, the specific manner in which the modules perform operations has been described in detail in the method embodiments, and will not be elaborated here.

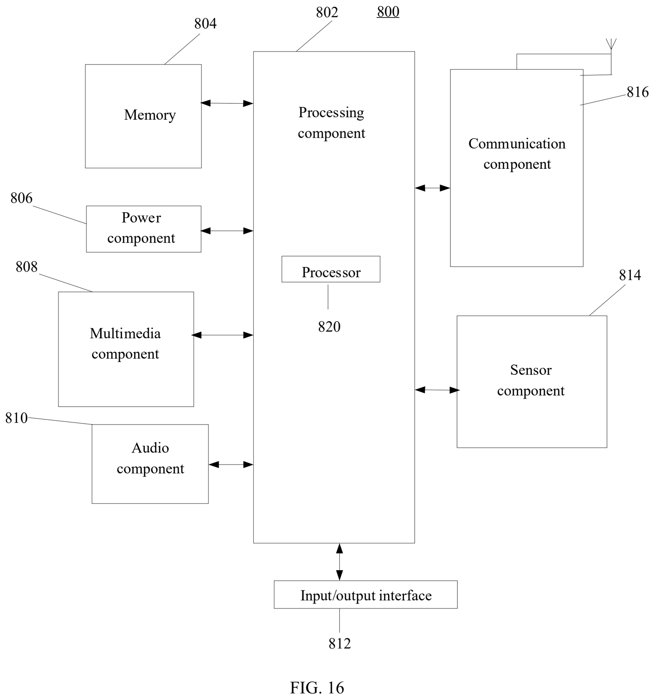

As shown in FIG. 16, an embodiment of the present disclosure provides a structure of a terminal.

Referring to FIG. 16, the embodiment provides a terminal 800, which may specifically be a mobile phone, a computer, a digital broadcast terminal, a messaging device, a game console, a tablet device, a medical device, a fitness device, a personal digital assistant, etc.

Referring to FIG. 16, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps of the above methods. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support operations on the device 800. Examples of such data include instructions for any application or method operating on the terminal 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power to various components of terminal 800. The power supply component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can not only sense boundaries of the touch or slide action, but also detect the duration and pressure associated with the touch or slide operation. In some embodiments, the multimedia component 808 includes a front camera and/or a rear camera. When the device 800 is in an operating mode, such as a shooting mode or a video mode, the front camera and/or the rear camera may receive external multimedia data. Each of the front camera and rear camera may be a fixed optical lens system or has a focal length and optical zoom capability.

The audio component 810 is configured to output and/or input audio signals. For example, the audio component 810 includes a microphone (MIC), and when the terminal 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as a keyboards, a click wheel, buttons, etc. These buttons may include but are not limited to: a home button, a volume button, a start button, and a lock button.

The sensor component 814 includes one or more sensors for providing various aspects of status assessment for the terminal 800. For example, the sensor component 814 can detect the open/closed state of the device 800, the relative positioning of the components, such as the display and keypad of the terminal 800, and the sensor component 814 can also detect the position change of the terminal 800 or a component of the terminal 800, the presence or absence of contact between the user and the terminal 800, the orientation or acceleration/deceleration of the terminal 800, and the temperature change of the terminal 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G or 3G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as the memory 804 including instructions, and the instructions can be executed by the processor 820 of the terminal 800 to perform the above methods. For example, the non-transitory computer-readable storage medium can be a ROM, a random access memory (RAM), a CD-ROM, a magnetic tape, a floppy disk, an optical data storage device, etc.

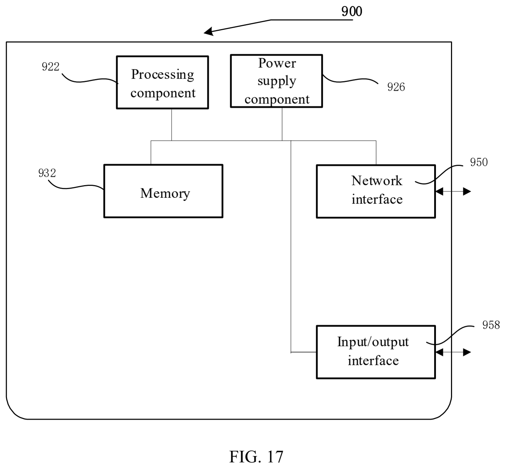

As shown in FIG. 17, an embodiment of the present disclosure illustrates a structure of a base station. For example, the base station 900 may be provided as a network-side device. Referring to FIG. 17, the base station 900 includes a processing component 922, which further includes one or more processors, and a memory resource represented by a memory 932 configured to store instructions executable by the processing component 922, such as an application. The application stored in the memory 932 may include one or more modules, each of which corresponds to a set of instructions. In addition, the processing component 922 is configured to execute the instructions to perform any method applied to the base station in the aforementioned methods.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS X TM, Unix TM, Linux TM, FreeBSD TM or the like.

Those skilled in the art will readily appreciate other embodiments of the present disclosure after considering the specification and practicing the present disclosure disclosed herein. The present disclosure is intended to cover any variations, uses or adaptations of the present disclosure that follow the general principles of the present disclosure and include common knowledge or conventional technical measures in the art that are not disclosed in the present disclosure. The description and examples are to be considered illustrative only, and the true scope and spirit of the present disclosure are indicated by the following claims.

It should be understood that the present disclosure is not limited to the precise construction that has been described above and shown in the drawings and that various modifications and changes may be made without departing from the scope thereof. The scope of the present disclosure is limited only by the appended claims.

## Claims

1. An information reporting method, the method being performed by a terminal, and the method comprising:
sending first indication information to a base station of a non-terrestrial network (NTN);
wherein the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

2. The method according to claim 1, wherein the method further comprises one of:
performing the GNSS measurement based on trigger information sent by the base station, to obtain a GNSS measurement result;
performing the GNSS measurement based on measurement configuration information sent by the base station, to obtain a GNSS measurement result; and
performing the GNSS measurement based on predetermined measurement configuration information, obtain a GNSS measurement result.

3. The method according to claim 1, wherein sending the first indication information to the base station of the NTN comprises:
sending the first indication information to the base station through a predetermined resource; or
sending the first indication information to the base station through a resource indicated by second indication information that is received, wherein the second indication information is information sent by the base station to the terminal.

4. The method according to claim 3, wherein the second indication information is trigger information for triggering the terminal to perform the GNSS measurement.

5. The method according to claim 3, wherein the predetermined resource is a resource determined based on a resource used for the GNSS measurement.

6. The method according to claim 1, wherein in response to that the terminal successfully performs the GNSS, the first indication information indicates a validity duration of the GNSS information.

7. The method according to claim 1, wherein in response to that the terminal successfully performs the GNSS, the first indication information indicates information of a GNSS position fix time duration.

8. The method according to claim 1, wherein in response to that the terminal successfully performs the GNSS, the first indication information indicates at least one of:
information on successful GNSS measurement performed by the terminal; and
information indicating that GNSS assistance information is changed or is not changed; wherein the GNSS assistance information comprises information on a validity duration of the GNSS information and/or a GNSS position fix time duration.

9. The method according to claim 8, wherein in response to that the GNSS assistance information is changed, the method further comprises:
receiving request information sent by the base station for obtaining the GNSS assistance information; and
sending the GNSS assistance information to the base station.

10. The method according to claim 1, wherein the method further comprises:
receiving configuration information sent by the base station;
wherein the configuration information is configured to indicate a mapping relationship between a value of an information field of the first indication information, a GNSS measurement result, and a change result of the GNSS assistance information; and
wherein sending the first indication information to the base station of the non-terrestrial network (NTN) comprises:
sending the first indication information to the base station of the non-terrestrial network (NTN) based on the configuration information.

11. The method according to claim 1, wherein in response to that the terminal fails to successfully perform the GNSS measurement, the first indication information further indicates request information for requesting to obtain GNSS measurement configuration information, and the GNSS measurement configuration information is used for performing the GNSS measurement.

12. An information reporting method, the method being performed by a base station, and the method comprising:
receiving first indication information sent by a terminal accessing a NTN;
wherein the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

13. The method according to claim 12, wherein receiving the first indication information sent by the terminal accessing the NTN comprises:
receiving, through a predetermined resource, the first indication information sent by the terminal accessing the NTN; or
receiving, through a resource indicated by second indication information, the first indication information sent by the terminal accessing the NTN, wherein the second indication information is information sent by the base station to the terminal.

14. The method according to claim 13, wherein the second indication information is trigger information for triggering the terminal to perform the GNSS measurement.

15. The method according to claim 13, wherein the predetermined resource is a resource determined based on a resource used for the GNSS measurement.

16. The method according to claim 12, wherein in response to that the terminal successfully performs the GNSS, the first indication information indicates a validity duration of the GNSS information.

17. The method according to claim 12, wherein in response to that the terminal successfully performs the GNSS, the first indication information indicates information on a GNSS position fix time duration.

18. The method according to claim 12, wherein in response to that the terminal successfully performs the GNSS, the first indication information indicates at least one of:
information on successful GNSS measurement performed by the terminal; and
information indicating that GNSS assistance information is changed or is not changed; wherein the GNSS assistance information comprises information on a validity duration of the GNSS information and/or a GNSS position fix time duration.

19. The method according to claim 18, wherein in response to that the GNSS assistance information is changed, the method further comprises:
sending request information for obtaining the GNSS assistance information to the terminal; and
receiving the GNSS assistance information sent by the terminal.

20. The method according to claim 12, wherein the method further comprises:
sending configuration information to the terminal; wherein the configuration information is configured to indicate a mapping relationship between a value of an information field of the first indication information, a GNSS measurement result, and a change result of the GNSS assistance information;
wherein receiving the first indication information sent by the terminal accessing the NTN comprises:
receiving the first indication information sent by the terminal based on the configuration information.

21. The method according to claim 12, wherein the first indication information further indicates request information for requesting to obtain GNSS measurement configuration information, and the GNSS measurement configuration information is used for performing the GNSS measurement.

22. The method according to claim 12, wherein the method further comprises:
determining, based on the first indication information, that GNSS measurement is successful or unsuccessful.

23. An information reporting apparatus, comprising:
a sending module, configured to send first indication information to a base station of a non-terrestrial network (NTN);
wherein the first indication information indicates that a terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and the base station.

24. An information reporting apparatus, comprising:
a receiving module, configured to receive first indication information sent by a terminal accessing a NTN;
wherein the first indication information indicates that the terminal successfully performs or fails to successfully perform a global navigation satellite system (GNSS) measurement; position information of the terminal obtained by performing the GNSS measurement is used for determining compensation information, and the compensation information is used for synchronization compensation of data transmission between the terminal and a base station.

25. A communication device, comprising:
an antenna;
a memory; and
a processor, connected to the antenna and the memory, respectively, wherein the processor is configured to control transmission and reception of the antenna and is able to implement the method according to any one of claims 1 to 11 or 12 to 22 by executing computer executable instructions stored in the memory.

26. A computer storage medium storing computer executable instructions, wherein the computer executable instructions, after being executed by a processor, are able to implement the method according to any one of claims 1 to 11 or 12 to 22.
